# EUROPÄISCHE PATENTSCHRIFT

(11) **EP 0 368 182 B1**
(45) Veröffentlichungstag und Bekanntmachung des Hinweises auf die Patenterteilung: **23.06.1993**
(21) Anmeldenummer: 89120444.8
(22) Anmeldetag: 04.11.1989
(51) Int. Cl.: B64C 11/30

(54) **Propfan/Turboproptriebwerk mit einer Vorrichtung zur Verstellung der Rotorschaufeln**
Propfan-turboprop unit with rotor blade control device
Groupe propfanturbopropulseur avec un dispositif pour la régulation des pales

(30) Priorität: 09.11.1988 DE 3837994
(43) Veröffentlichungstag der Anmeldung: 16.05.1990
(73) Patentinhaber: MTU MOTOREN- UND TURBINEN-UNION MÜNCHEN GMBH, D-80976 München (DE)
(72) Erfinder: Rohra, Alois, D-8000 München 90 (DE); Geidel, Helmut-Arnd, D-8047 Karlsfeld (DE)

(56) Entgegenhaltungen:
- DE-A- 3 611 792
- GB-A- 2 182 397

## Beschreibung

Die Erfindung betrifft ein Propfan/Turboproptriebwerk mit zwei gegenläufig drehenden Propfanrotoren, die über separate, konzentrische, in einem Gehäuse gelagerte Wellen von zwei Turbinen angetrieben sind und mit einer Vorrichtung zur Verstellung der Rotorschaufeln mittels in Umfangsrichtung verdrehbarer Spindeln, die jeweils mit einem von zwei axial hintereinander angeordneten Rotorschaufelkränzen kinematisch gekoppelt sind.

Ein Triebwerk der gattungsgemäßen Bauart ist aus der DE-A 36 14 157 bekannt. Bei dieser Anordnung sind zwei Propfan-Rotoren radial außerhalb der zu treibenden Turbinen des Gasturbinentriebwerks angeordnet. Die konstruktive Ausführung einer Verstellvorrichtung für die Propfanschaufeln ist dabei unkritisch, da feststehende Gehäuseteile in der Umgebung der Verstellvorrichtung zur Verfügung stehen, die zur Abstützung der Verstellkräfte erforderlich sind. Nachteilig bei dieser Ausführung wirkt sich insbesondere aus, daß die heißen Brenngase um die Verstellvorrichtung herumgeführt werden und so thermisch bedingte Ungenauigkeiten auftreten. Ferner ist die thermische Belastung der Verstellvorrichtung außerordentlich groß. Derartige getriebelose Varianten von Propfan-Turboproptriebwerken sind ohne Probleme nur am Flugzeugheck montierbar und erfordern zur Übertragung der Kräfte von der treibenden Niederdruckturbine auf die Fanschaufeln aufwendig und schwere Rahmenkonstruktion.

Bei einem Propfan-Triebwerk mit vornliegenden Propfanschaufeln, beispielsweise gemäß der DE-A 31 11 792 treten diese aerodynamischen Nachteile nicht auf. Die bisher bekannten Triebwerke weisen eine Nutzturbine auf, die über ein Untersetzungsgetriebe mit den beiden gegenläufig rotierenden Propfanschaufelkränzen gekoppelt ist. Das im Bereich radial innerhalb der Propfanschaufelkränze angeordnete Untersetzungsgetriebe ist an feststehenden Gehäuseteilen abgestützt. Somit ist auch in diesem Fall die Unterbringung und Abstützung von Verstellvorrichtungen zum Verschwenken der Propfanschaufeln unkritisch. Die Vorrichtung erfolgt bei der vorbekannten Konstruktion durch kinematische Kopplung zweier Spindeln mittels Umlaufrädergetriebe. Das Untersetzungsgetriebe zwischen den Rotoren weist jedoch ein außerordentlich hohes Gewicht auf, da große Leistungen zu verarbeiten sind. Dieses hohe Gewicht wiederum ist von Nachteil, weil dadurch das Abfluggewicht des Flugzeuges erhöht ist, was sich für die Wirtschaftlichkeit des Flugzeuges ungünstig auswirkt. Außerdem reduziert ein Getriebe die Zuverlässigkeit des Triebwerkes.

Aufgabe der vorliegenden Erfindung ist es, ein Propfan/Turboproptriebwerk der gattungsgemäßen Art anzugeben, bei dem ohne Untersetzungsgetriebe zwischen den Rotoren eine exakte Verstellung der Rotorschaufeln beider Propfanrotoren ermöglicht und so eine Anpassung an unterschiedliche Flugbedingungen möglich ist.

Erfindungsgemäß wird diese Aufgabe durch die im Kennzeichnungsteil des Patentanspruchs 1 angegebenen Merkmale gelöst. Vorteilhafte Weiterbildungen der Erfindung ergeben sich aus den Unteransprüchen.

Die erfindungsgemäße Anordnung hat den Vorteil, daß eine Einleitung der zum Verstellen erforderlichen Reaktionskräfte in das Triebwerksgehäuse möglich ist, obwohl der gehäuseferne Propfanrotor keine Möglichkeit zur direkten Abstützung im Gehäuse aufweist.

In einer bevorzugten Ausbildung der Erfindung stehen die Drehzahlen der beiden Wellen in einem geometrisch festgelegten Verhältnis zueinander. Insbesondere sollen die Rotoren mit entgegengesetzt gleicher Drehzahl drehen. Dies wird dadurch erreicht, daß im Triebwerk, beispielsweise im Bereich der Turbinen ein oder mehrere Zahnräder vorgesehen sind, die mit beiden Wellen kämmen und somit die festgelegte Drehzahl definieren.

Gemäß dieser Ausführung ist ein Verstellmotor im ersten Rotor abgestützt und steht mit beiden Stellringen in Wirkverbindung. D. h., eine Drehbewegung relativ zum ersten Rotor wird in den ersten Stellring direkt und in den zweiten Stellring über die entsprechenden Zwischenglieder geleitet.

Gemäß einer alternativen Ausführung der Erfindung, bei der die Wellen nicht miteinander synchronisiert sind und somit die Drehzahlen nicht fest miteinander gekoppelt sind, können sich diese je nach der an den Rotorschaufeln aufgenommenen Belastung frei einstellen. Dabei wird das Momentengleichgewicht in den Propfanrotoren durch die freie Blattverstellung hergestellt.

Ändert sich der Betriebszustand von bestehenden Momentengleichgewicht so, daß einer der Propfanrotoren weniger Arbeit aufnimmt, so hat mit dieser gekoppelten Turbinenstufe das Bestreben, in seiner Drehzahl anzusteigen. Der Anstieg der betreffenden Wellendrehzahl veranlaßt nun den erfindungsgemäßen Schaufelverstellmechanismus, die Schaufel so einzustellen, daß die Fanstufe wieder mehr Arbeit aufnimmt, wodurch die Wellendrehzahl wieder gesenkt wird. Werden die Rotorschaufeln mehr belastet, sinkt die Turbinendrehzahl und die Rotorschaufeln werden in eine Stellung mit weniger Belastung gefahren, wodurch die Turbinendrehzahl wiederum steigt. Diese Regelung gilt für beide Propfanrotoren, da diese über das erfindungsgemäße Rädersystem miteinander gekoppelt sind. Das Rädersystem ist dabei vorzugsweise so ausgelegt, daß bei gleichgroßer, aber entgegengesetzter, Drehzahl der Propfanrotoren keine Relativbewegungen im Verstellsystem stattfinden.

Eine bevorzugte Weiterbildung der Erfindung sieht vor, daß ein am Gehäuse abgestützter Verstellmotor vorgesehen ist, mittels dem eine zusätzliche Verstellung der Rotorschaufelkränze möglich ist. Dadurch läßt sich vorteilhafterweise zusätzlich zur automatisch funktionierenden Ausgleichsregelung eine Schaufelverstellung überlagern, mittels der beispielsweise das Triebwerk auf Umkehrschub gestellt werden kann. Die Anordnung hat den großen Vorteil, daß der zur Schaufelverstellung benötigte Verstellmotor nicht mitrotiert, sondern ortsfest im Gehäuse abgestützt ist. Dadurch ist ferner die Energiezuführung zum Motor einfach durchzuführen. Außerdem gestattet diese Anordnung einen schnellen Austausch eines defekten Motors.

Die Erfindung wird nachfolgend anhand der beigefügten Zeichnungen näher erläutert. Dabei zeigt:
- Fig. 1: einen Teillängsschnitt durch ein Propfan-Turbotriebwerk,
- Fig. 2: einen Teillängsschnitt durch ein alternatives Propfan-Turbotriebwerk,
- Fig. 3: einen Längsschnitt durch ein Wellensynchronisiergetriebe.

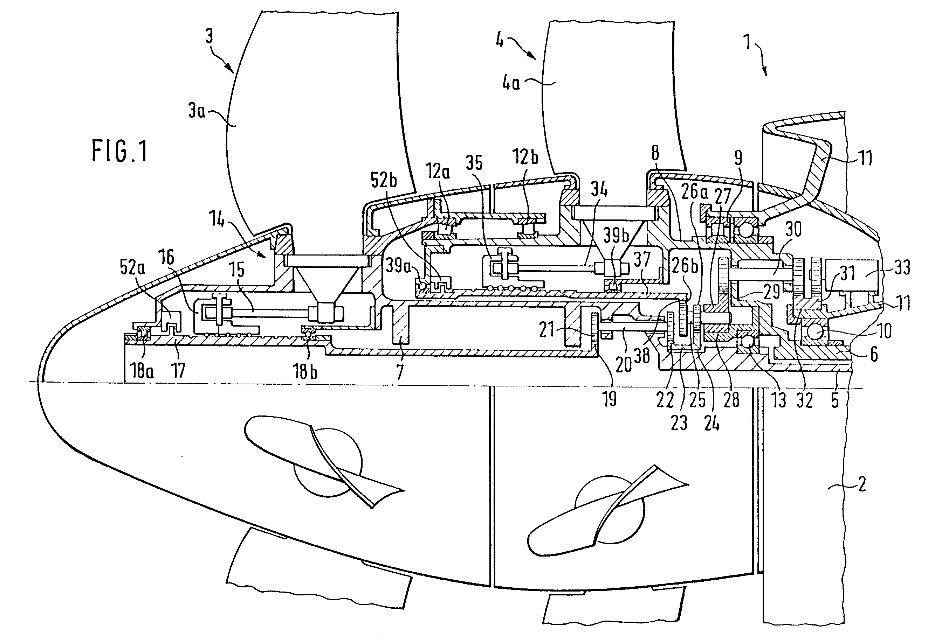

Das in Fig. 1 dargestellte Propfan-Turbotriebwerk 1 besteht aus einer nicht näher dargestellten Gasturbine im Bereich 2, die mit zwei gegenläufig rotierenden Rotorschaufelkränzen 3 und 4 verbunden ist. Die Kopplung zwischen Gasturbine 2 und den Rotorschaufelkränzen 3 und 4 erfolgt dabei über zwei konzentrische Wellen 5 und 6, wobei die Welle 5 über einen ersten Rotor 7 mit einem ersten Rotorschaufelkranz 3 und die konzentrische äußere Welle 6 über einen zweiten Rotor 8 mit einem zweiten, hinteren Rotorschaufelkranz 4 verbunden ist. Der zweite, hintere Rotor 8 ist über die Lageranordnungen 9 und 10 im Gehäuse 11 gelagert. Der erste Rotor 7 ist widerrum über Lager 12a, 12b und 13 im zweiten Rotor gelagert.

Eine gezeigte Rotorschaufel 3a des ersten Rotorschaufelkranzes 3 ist mittels einer schematisch angedeuteten Führungsvorrichtung 14 verschwenkbar im ersten Rotor 7 gelagert. Die Rotorschaufel 3a ist ferner über einen ersten Verstellhebel 15 mit einem ersten Stellring 16 verbunden. Der erste Stellring 16 steht über Kugeln mit einer ersten Spindel 17 in Wirkverbindung, die widerrum mittels Wälzlager 18a und 18b im ersten Rotor 7 gelagert ist.

Das freie Ende der ersten Spindel 17 weist eine Verzahnung 19 auf, die mit einer Mehrzahl beabstandet angeordneter Planetenbolzen 20 über Bolzenverzahnungen 21 im Eingriff stehen. Die Planetenbolzen 20 sind dabei im ersten Rotor 7 drehbar gelagert.

Die Planetenbolzen 20 weisen an ihrem anderen Ende eine weitere Bolzenverzahnung 22 auf, die die gleichen Teilkreisdurchmesser wie die Bolzenverzahnung 21 besitzt. Die Bolzenverzahnungen 22 der Planetenbolzen 20 stehen mit einem Stellrad 23 im Eingriff. Das Stellrad 23 ist im Rotor 7 mittels einer Gleitführung 24 drehbar gelagert. Ferner steht das Stellrad 23 mit einer Anzahl gleichmäßig beabstandeten Planetenrädern 25 über Planetenradverzahnungen 26a im Eingriff.

Die Planetenräder 25 wiederum sind in einem ringförmigen Steg 27 gelagert, wobei der Steg 27 mittels Gleitführungen 28 im zweiten Rotor 8 in Umfangsrichtung verdrehbar gehalten ist.

Der Steg 27 weist an seinem Außenumfang eine Stegverzahnung 29 auf, die mit einer Anzahl regelmäßig beabstandeter Planetenbolzen 30 kämmt. Die Planetenbolzen 30 sind im zweiten Rotor 8 drehbar gelagert und stehen mit einem im Gehäuse 11 abgestützten Zahnkranz 31 im Eingriff.

Der Zahnkranz 31 kann entweder starr mit dem Gehäuse 11 verbunden sein oder, wie in der gezeigten Ausführung, über eine Gleitlagerführung 32 in Umfangsrichtung im Gehäuse 11 drehbar sein. In diesem Fall steht der Zahnkranz 31 mit einem am Gehäuse 11 abgestützten Verstellmotor 33 im Eingriff.

Die gezeigte Rotorschaufel 4a, die Bestandteil des hinteren Rotorschaufelkranzes 4 ist, ist analog der Rotorschaufel 3a verschwenkbar im zweiten Rotor 8 gelagert. Über einen zweiten Verstellhebel 34 ist diese mit einem zweiten Stellring 35 kinematisch gekoppelt, der wiederum mit einer zweiten Spindel 37 derart über Kugeln gekoppelt ist, daß bei Rotation der Spindel 37 in Umfangsrichtung der Stellring 35 in axialer Richtung bewegt wird. Die Spindel 37 ist verlängert und kämmt mittels einer Innenverzahnung 38 mit einer zweiten Planetenradverzahnung 26b. Dabei sind die Planetenradverzahnungen 26a und 26b so aufeinander abgestimmt, daß bei einem festgelegten Drehzahlverhältnis der Rotoren 7 und 8 keine Relativbewegungen der Spindeln 37 und 17 gegenüber den Rotoren auftreten. Die Spindel 37 ist ferner über Lagerungen 39a und 39b im zweiten Rotor 8 in Umfangsrichtung drehbar gelagert.

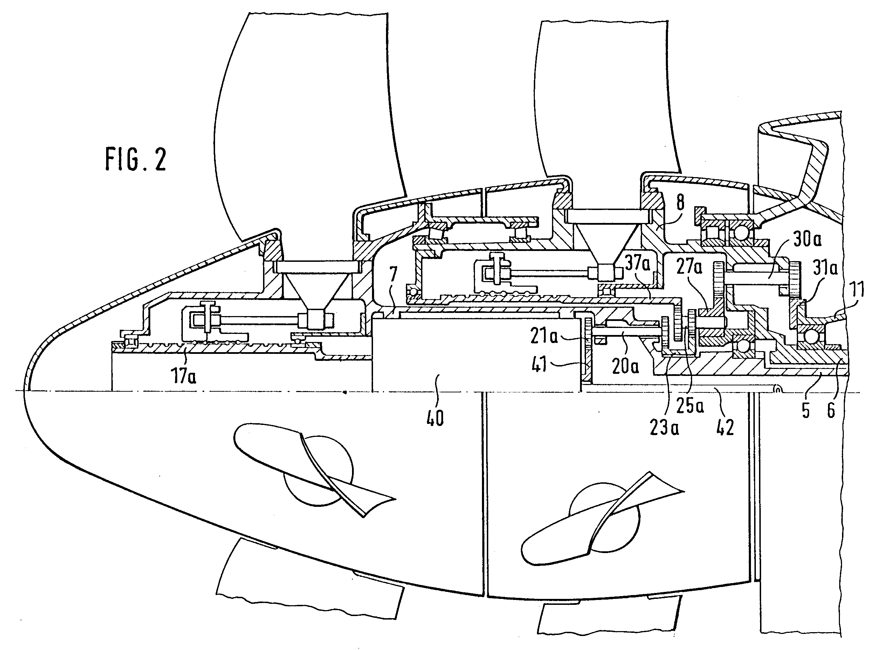

Die in Fig. 2 gezeigte alternative Ausführungsform der Erfindung ist im wesentlichen wie die in Fig. 1 gezeigte Ausführung aufgebaut. Als wesentlicher Unterschied gegenüber der oben dargestellten Ausführung ist der mit den Planetenbolzen 30a befindliche Zahnkranz 31a am Gehäuse 11 befestigt, insbesondere verschraubt. Somit steht der Steg 27a relativ zum Gehäuse 11 fest, da die beiden Verzahnungen der Planetenbolzen 30a gleichen Teilkreisdurchmesser aufweisen. Der Steg 27a kann somit trotz des zwischen diesem und dem Gehäuse 11 rotierenden zweiten Rotors 8 als gehäusefest angesehen werden und eignet sich somit zum Abstützen der in den Rotorschaufelkränzen 3 und 4 auftretenden Kräfte.

Weiterhin ist im Unterschied zur erstgenannten Ausführung die erste Spindel 17a nicht direkt mit der Bolzenverzahnung 21a der Planetenbolzen 20a verbunden. Vielmehr ist ein im ersten Rotor 7 abgestützter Verstellmotor 40 vorgesehen, der an seiner vorderen axialen Stirnfläche mit der Spindel 17a verbunden ist und diese relativ zum ersten Rotor 7 in Umfangsrichtung verdrehen kann. An seiner hinteren Stirnfläche ist der Verstellmotor 40 mit einem Stellrad 41 verbunden, welches mit den Bolzenverzahnungen 21a der Planetenbolzen 20a kämmt Das Stellrad 41 ist gleichsinnig zur Spindel 17a gegenüber dem Verstellmotor 40 in Umfangsrichtung verdrehbar, wobei sich der Verstellwinkel über die Planetenbolzen 20a, das Stellrad 23a, das Planetenrad 25a auf die Spindel 37a des hinteren Rotorschaufelkranzes 4 überträgt.

Die Energieversorgung des Verstellmotors 40 erfolgt über die Leitung 42, welche konzentrisch innerhalb der beiden Wellen 5 und 6 aus dem Statorbereich hinter den diese treibenden Turbinen erfolgt. Vorzugsweise ist der Verstellmotor 40 hydraulisch ausgeführt, so daß durch die Leitung 42 Hydrauliköl gefördert wird. Alternativ ist der Verstellmotor 40 auch auf andere Art, insbesondere elektrisch ausführbar.

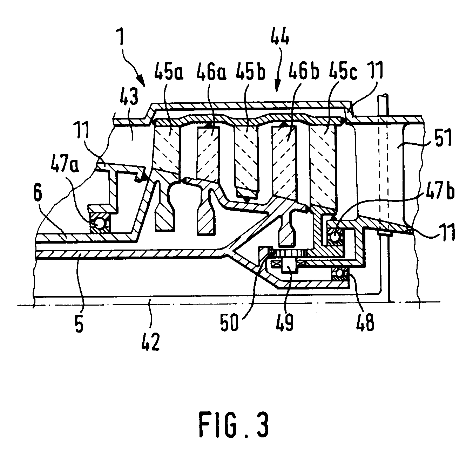

In Fig. 3 ist schematisch der Turbinenbereich des Propfantriebwerkes 1 gezeigt. Der von der nicht dargestellten Brennkammer bzw. Gaserzeuger turbine ankommende Heißgasstrom beaufschlagt über den ringförmigen Strömungskanal 43 die gegenläufige Niederdruckturbine 44. Diese besteht aus drei miteinander gekoppelten Turbinenstufen 45a, b, c, die mit der konzentrisch äußeren Welle 6 gekoppelt sind. Zwei in Strömungsrichtung zwischen diesen angeordneten Turbinenstufen 46a und 46b sind miteinander und mit der inneren Welle 5 gekoppelt. Die Turbinenstufen 45 a, b, c sind über die Lager 47a und 47b im Gehäuse 11 abgestützt. Die Turbinenstufen 46a und 46b sind über das Lager 48 gehäuseseitig abgestützt. Ein Synchronisationsgetriebe 49 ist im Gehäuse 11 gelagert und steht mittels der Synchronisationsverzahnung 50 einerseits mit den Turbinenstufen 45 und der Welle 6, andererseits mit den Turbinenstufen 46 und der Welle 5 im Eingriff.

Die Turbinenstufen 45 und 46 sind so ausgebildet, daß sie sich durch den Heißgasstrom in entgegengesetzter Richtung drehen, wobei die genaue Einhaltung der entgegengesetzt gleichgroßen Drehzahl durch das zwischen beiden angeordnete Synchronisationsgetriebe 49 erzwungen wird.

Ferner ist in Fig. 3 die Leitung 42 gezeigt, die durch eine hohle Stützrippe 51 mit dem Raum außerhalb des Triebwerkes verbunden ist, so daß hierdurch der Verstellmotor 40 gemäß Fig. 2 ansteuerbar ist.

Die Verstellung der Rotorschaufelkränze 3 und 4 gemäß Fig. 1 erfolgt folgendermaßen: Ausgehend von einem Betriebszustand, in dem Gleichgewicht zwischen Rotorschaufelkränzen und Antriebsturbinen herrscht, wird nun angenommen, daß sich der Betriebszustand so ändert, daß ein Rotorschaufelkranz weniger Arbeit aufnimmmt als der andere. Die zuoehörige Turbinenstufe hat das Bestreben, in seiner Drehzahl anzusteigen. Der Anstieg der Wellendrehzahl veranlaßt nun den in Fig. 1 dargestellten Schaufelverstellmechanismus, die Schaufel so einzustellen, daß der Rotorschaufelkranz mehr Arbeit aufnimmt, wodurch die Wellendrehzahl wieder gesenkt wird. Wird ein Rotorschaufelkranz hingegen mehr belastet, sinkt die Turbinendrehzahl, der Rotorschaufelkranz wird automatisch in eine Stellung mit weniger Belastung verschwenkt und die Turbinendrehzahl steigt wieder. Diese Regelung gilt für beide Rotorschaufelkränze 3 und 4, da diese miteinander kinematisch gekoppelt sind. Dabei ist das Rädersystem, insbesondere die Planetenradverzahnungen 26a und b der Planetenräder 25 so ausgelegt, daß bei gleichgroßer, aber entgegengesetzter Drehzahl der Rotoren 7 und 8 keine Relativbewegungen im Verstellsystem stattfinden.

Wird beispielsweise der Rotorschaufelkranz 3 entlastet, so hat dieser das Bestreben, seine Drehzahl zu erhöhen, da ihm über die Welle 5 und den ersten Rotor 7 von der Turbine (Turbinenstufen 46a, b) ein größeres Drehmoment angeboten wird. Unter der Annahme, daß im Rotor 8 bzw. im Rotorschaufelkranz 4 keine Belastungsänderung auftritt, hat dieser zunächst keine Veranlassung, seine Drehzahl zu ändern. Das bedeutet, daß sich an den Bewegungsabläufen am Steg 27 und an der Spindel 37 nichts ändert. Für den Steg 27 bedeutet das, daß dieser nach wie vor relativ zum Gehäuse 11 still steht.

Mit der Drehzahlerhöhung der Welle 5 und des damit verbundenen Rotors 7 würde sich, wenn keine Relativbewegungen der einzelnen Räder des Rotors 7 zueinander stattfinden, auch die Drehzahl des Stellrades 23 erhöhen. Da aber eine solche Änderung nicht möglich ist, muß eine Relativbewegung des Stellrades 23 relativ zum Rotor 7 stattfinden, die sich über die Planetenbolzen 20 und den Stellring 19 auf die Spindel 17 überträgt.

Durch das Verdrehen der Spindel 17 wird der Stellring 16 axial verschoben, wodurch über den Verstellhebel 15 die Rotorschaufel 3a des Rotorschaufelkranzes 3 verschwenkt wird. Wird dabei der Rotorschoufelkranz 3 so gedreht, daß er in eine Position mit größerer Arbeitsaufnahme kommt, so führt dies widerrum zu einer Drehzahlabsenkung des Rotorschaufelkranzes 3 bzw. des Rotors 7 und der Welle 5. Die Relativbewegung und die damit verbundene Schaufelverstellung wird zwangsläufig solange ausgeführt, bis sich wieder Drehzahlgleichgewicht zwischen den Rotoren 7 und 8 bzw. den Rotorschaufelkränzen 3 und 4 einstellen. Genauso verhält es sich, wenn anstelle des Rotorschaufelkranzes 3 der Rotorschaufelkranz 4 einen anderen Momentenzustand annimmt.

Man kann somit die Drehzahlangleichung über jeden der beiden Rotoren 7,8 vornehmen, und zwar einzeln oder kombiniert. Notwendig zur gezielten Drehzahlangleichung eines der beiden Rotoren an den anderen ist eine Blockiervorrichtung (Pitch Lock), mittels dessen die Verstellung eines der beiden Rotorschaufelkränze gezielt unterbunden werden kann. Dies geschieht beispielsweise mittels der in Fig. 1 eingezeichneten Blockiervorrichtungen 52a und 52b, welche ein Verdrehen der Spindeln 17 bzw.37 gegenüber den Rotoren 7 bzw. 8 unterbinden. Bei der Notwendigkeit einer Schaufelverstellung wird durch entsprechendes Lösen der betreffenden Blockiervorrichtung 52a, b eine gezielte Drehzahlanpassung erfolgen.

Die gezielte Verstellung der Rotorschaufelkränze 3 und 4, insbesondere die Einstellung einer Schubumkehrposition erfolgt durch den Verstellmotor 33, der den Zahnkranz 31a und somit über den Planetenbolzen 30 in Steg 27 relativ zum Gehäuse in Umfangsrichtung verdreht.

Die in Fig. 2 dargestellte Ausführung der Erfindung funktioniert analog, nur daß die beiden Wellen 5 und 6 mittels dem in Fig. 3 dargestellten Synchronisationsgetriebe 49 mit exakt entgegengesetzt gleicher Drehzahl rotieren. Die Verstellung erfolgt mit dem Verstellmotor 40 wobei die mit diesem verbundene Spindel 17a bzw. das Stellrad 41 getrennt angesteuert werden können. Hierdurch läßt sich eine individuelle Verstellung der Rotorschaufelkränze 3 und 4 erzielen, wobei die in Fig. 1 dargestellten Blockiervorrichtungen 52a und b entfallen können.

## Patentansprüche

1. Propfan/Turboproptriebwerk mit zwei gegenläufig drehenden Propfanrotoren (7, 8) die über separate, konzentrische, in einem Gehäuse (11) gelagerte Wellen (5, 6) von zwei Turbinen angetrieben sind und mit einer Vorrichtung zur Verstellung der Rotorschaufeln (3a, 4a) mittels in Umfangsrichtung verdrehbarer Spindeln (17, 37), die jeweils mit einem von zwei axial hintereinander angeordneten Rotorschaufelkränzen (3, 4) kinematisch gekoppelt sind, dadurch gekennzeichnet, daß die Spindeln (17, 37) mit Verzahnungen (19, 38) über ein Umlaufrädergetriebe gekoppelt sind, welches eine Anzahl doppelt verzahnter Planetenräder (25, 25a) aufweist, die in einem drehbar gelagerten Steg (27, 27a) befestigt sind, wobei der Steg (27, 27a) über auf einer der Propfan-Rotoren (7, 8) gelagerte Planetenglieder (30, 30a) gehäuseseitig abgestützt ist und die mit den Spindeln (17, 37; 17a, 37a) in Wirkverbindung stehenden Verzahnungen (26a, 26b) der Planetenräder (25) so dimensioniert sind, daß bei einem festgelegten Drehzahlverhältnis der Propfanrotoren (7, 8) keine Relativbewegungen der Spindeln (17, 37; 17a, 37a) gegenüber dem jeweils zugehörigen Rotor (7, 8) auftreten.

2. Vorrichtung nach Anspruch 1, dadurch gekennzeichnet, daß eine erste, zur Verstellung eines ersten Rotorschaufelkranzes (3) dienende Spindel (17) über im ersten Rotor (7) gelagerte Planetenbolzen (20) mit einem Stellrad (23) verbunden ist, das mit jeweils einer der Verzahnungen (26a) der Planetenräder (25) im Eingriff steht.

3. Vorrichtung nach Anspruch 1 oder 2, dadurch gekennzeichnet, daß eine zweite, zur Verstellung eines zweiten Rotorschaufelkranzes (4) dienende Spindel (37) zu einem Hohlrad ausgebildet ist, das mit den zweiten Verzahnungen (26b) der Planetenräder (25) im Eingriff steht.

4. Vorrichtung nach einem der vorhergehenden Ansprüche, dadurch gekennzeichnet, daß die Planetenglieder (30) im zweiten Rotor (8) gelagert sind und mit zwei gleich großen Verzahnungen einerseits mit dem Steg (27), andererseits mit einem im Gehäuse (11) abgestützten Zahnkranz (31) kämmen.

5. Vorrichtung nach einem der vorhergehenden Ansprüche, dadurch gekennzeichnet, daß das Stellrad (23) im ersten Rotor (7) in Umfangsrichtung drehbar gelagert ist und von radial innen mit den ersten Verzahnungen (26a) der Planetenräder (25) kämmt.

6. Vorrichtung nach einem der vorhergehenden Ansprüche, dadurch gekennzeichnet, daß die Planetenbolzen (20) zwei Bolzenverzahnungen (22) gleichen Teilkreisdurchmessers aufweist, die an dessen entgegengesetzten Enden vorgesehen sind.

7. Vorrichtung nach einem der vorhergehenden Ansprüche, dadurch gekennzeichnet, daß die Planetverzahnungen (26a, 26b) der Planetenräder (25) so gewählt sind, daß die Rotorschaufelkränze (3, 4) mit entgegengesetzt gleicher Drehzahl rotieren.

8. Vorrichtung nach einem der vorhergehenden Ansprüche, dadurch gekennzeichnet, daß die Spindeln (17, 37; 17a, 37a) über Stellringen (16, 35) und Verstellhebel (15, 34) mit den Rotorschaufeln (3a, 4a) gekoppelt sind.

9. Vorrichtung nach einem der vorhergehenden Ansprüche, dadurch gekennzeichnet, daß ein Verstellmotor (40) im ersten Rotor (7) abgestützt ist und mit beiden Spindeln (17a, 37a) in Wirkverbindung steht.

10. Vorrichtung nach Anspruch 9, dadurch gekennzeichnet, daß der Verstellmotor (40) hydraulisch ausgeführt ist.

11. Vorrichtung nach Anspruch 9, dadurch gekennzeichnet, daß der Verstellmotor (40) axial zwischen der ersten Spindel (17a) und den Planetenbolzen (20a) angeordnet ist und mit der ersten Spindel (17a) verbunden ist und wobei ein mit dem Verstellmotor (40) verbundenes Stellrad (41) mit den Planetenbolzen (20a) über die Bolzenverzahnung (21a) im Eingriff steht.

12. Vorrichtung nach einem der Ansprüche 1 bis 8, dadurch gekennzeichnet, daß der Zahnkranz (31) in Umfangsrichtung drehbar im Gehäuse (11) gelagert ist und eine Verdrehung mittes eines am Gehäuse (11) abgestützten Verstellmotors (33) erfolgt.

13. Vorrichtung nach einem der vorhergehenden Ansprüche, dadurch gekennzeichnet, daß beide Rotorschaufelkränze (3, 4) mit Blockiervorrichtungen (52a, 52b) versehen sind.

## Claims

1. Prop fan/turbo prop engine having two prop fan rotors (7, 8) which rotate in opposite directions and are driven via separate concentric shafts (5, 6) of two turbines mounted in a housing (11), and having a device for adjusting the rotor blades (3a, 4a) by means of spindles (17, 37) which can rotate in the peripheral direction and are coupled kinematically in each case with one of two rotor blade rings (3, 4) disposed axially behind one another, characterised in that the spindles (17, 37) are coupled by gears (19, 38) via a planetary gear system which comprises a number of double gear planet wheels (25, 25a) which are secured in a rotatably mounted flange (27, 27a), wherein the flange (27, 27a) is supported at the housing end via planet members (30, 30a) mounted on one of the prop fan rotors (7, 8), and the gears (26a, 26b) of the planet wheels (25) which are connected for operation to the spindles (17, 37; 17a, 37a) are dimensioned such that there are no relative movements of the spindles (17, 37; 17a, 37a) with respect to the associated rotor (7, 8) in each case at a preset rotational speed ratio of the prop fan rotors (7, 8).

2. Device according to Claim 1, characterised in that a first spindle for adjusting a first rotor blade ring (3) is connected via planet pins (20) mounted in the first rotor (7) to a setting gear (23) which engages with one of the gears (26a) of the planet wheels (25) in each case.

3. Device according to Claim 1 or 2, characterised in that a second spindle (37), for adjusting a second rotor blade ring (4), is in the form of a hollow wheel which engages with the second gears (26b) of the planet wheels (25).

4. Device according to any one of the preceding claims, characterised in that the planet members (30) are mounted in the second rotor (8) and mesh by means of two gears of equal size firstly with the flange (27) and secondly with a toothed ring (31) supported in the housing (11).

5. Device according to any one of the preceding claims, characterised in that the setting gear (23) is mounted in the first rotor (7) so as to rotate in the peripheral direction. and meshes radially from the interior with the first gears (26a) of the planet wheels (25).

6. Device according to any one of the preceding claims, characterised in that the planet pins (20) comprise two gears (22) of the same reference diameter which are provided at the opposite ends of the planet pins.

7. Device according to any one of the preceding claims, characterised in that the planet gears (26a, 26b) of the planet wheels (25) are selected such that the rotor blade rings (3, 4) rotate at the same speed in opposite directions.

8. Device according to any one of the preceding claims, characterised in that the spindles (17, 37; 17a, 37a) are coupled to the rotor blades (3a, 4a) via setting gears (16, 35) and adjusting levers (15, 34).

9. Device according to any one of the preceding claims, characterised in that an adjusting motor (40) is supported in the first rotor (7) and is connected for operation to the two spindles (17a, 37a).

10. Device according to Claim 9, characterised in that the adjusting motor (40) is hydraulic.

11. Device according to Claim 9, characterised in that the adjusting motor (40) is axially disposed between the first spindle (17a) and the planet pins, and is connected to the first spindle (17a), and wherein a setting gear (41) connected to the adjusting motor (40) engages with the planet pins (20a) via the gear (21a).

12. Device according to any one of Claims 1 to 8, characterised in that the toothed ring (31) is mounted in the housing (11) so as to be rotatable in the peripheral direction and rotation is generated by means of an adjusting motor (33) supported on the housing (11).

13. Device according to any one of the preceding claims, characterised in that both rotor blade rings (3, 4) are provided with pitch locks (52a, 52b).

## Revendications

1. Propfan-turbopropulseur avec des propfan-rotors (7, 8) tournant en sens contraire, qui sont entraînés par deux turbines au moyen d'arbres (5, 6) montés séparément et concentriquement dans un carter (11) et avec un dispositif pour régler les pales de rotor (3a, 4a) au moyen de broches (17, 37) pouvant tourner dans le sens périphérique, qui sont couplées cinématiquement respectivement avec l'une de deux couronnes de pales de rotor (3, 4) disposées axialement l'une derrière l'autre, propfan-turbopropulseur caractérisé en ce que les broches (17, 37) sont couplées avec des dentures (19, 38) au moyen d'un engrenage à roues épicycloïdales, qui présente un certain nombre de roues planétaires (25, 25a) à double denture, qui sont fixées dans une traverse (27, 27a) montés de façon à pouvoir tourner, la traverse (27, 27a) étant calée du côte du carter au moyen d'organes planétaires (30, 30a) montés sur l'un des propfan-rotors (7, 8) et qui sont dimensionnées avec les dentures (26a, 26b) des roues planétaires (25) se trouvant en liaison opérationnelle avec les broches (17, 37; 17a, 37a), de telle façon que ne se produise aucun mouvement relatif des broches (17, 37; 17a, 37a), quand on a un rapport fixe des vitesses de rotation des propfan-rotors (7, 8), par rapport au rotor respectivement correspondant.

2. Dispositif selon la revendication 1, caractérisé en ce qu'une première broche (17) servant au réglage d'une première couronne de pales de rotor (3) est reliée au moyen d'axes planétaires (20) montés dans le premier rotor (7) à une roue de réglage (23) qui est en prise avec respectivement l'une des denturez (26a) des roues planétaires (25).

3. Dispositif selon la revendication 1 ou 2, caractérisé en ce qu'une deuxième broche (37) servant au réglage d'une deuxième couronne de pales de rotor (4) est formée en roue creuse, qui est en prise avec les deuxièmes dentures (26b) des roues planétaires (25).

4. Dispositif selon l'une des revendications précédentes, caractérisé en ce que les organes planétaires (30) sont montés dans le deuxième rotor (8) et engrènent par ailleurs avec une couronne dentée (31) calée dans le carter (11).

5. Dispositif selon l'une des revendications précédentes, caractérisé en ce que la roue de réglage (23) est montée de façon à pouvoir tourner dans le sens périphérique dans le premier rotor (7) et engrène radialement de l'intérieur avec les premières dentures (26a) des roues planétaires (25).

6. Dispositif selon l'une des revendications précédentes, caractérisé en ce que les axes planétairez (20) présentent deux dentures (22) de même diamètre de secteur, qui sont prévues à leurs extrémités opposées.

7. Dispositif selon l'une des revendications précédentes, caractérisé en e que les dentures planétaires (26a, 26b) des roues planétaires (25) sont choisies de telle façon que les couronnes de pales de rotor (3, 4) tournent à la même vitesse de rotation en sens opposé.

8. Dispositif selon l'une des revendications précédentes, caractérisé en ce que les broches (17, 37; 17a, 37a) sont couplées au moyen de bagues de réglage (16, 35) et de levierz de réglage (15, 34) aux pales de rotor (3a, 4a).

9. Dispositif selon l'une des revendications précédentes, caractérisé en ce qu'un servo-moteur (40) est calé dans le premier rotor (7) et est en liaison opérationnelle avec les deux broches (17a, 37a).

10. Dispositif selon la revendication 9, caractérisé en ce que le moteur de réglage (40) est réalisé sous forme d'un moteur hydraulique.

11. Dispositif selon la revendication 9, caractérisé en ce que le servo-moteur (40) est disposé axialement entre la première broche (17a) et l'axe planétaire (20a) et est relié à la première broche (17a), une roue de réglage (41) reliée au servo-moteur (40) étant en prise avec les axes planétairez (20a) par l'intermédiaire de la denture (21a).

12. Dispositif selon l'une es revendications 1 à 8, caractérisé en ce que la couronne dentée (31) est montée dans le carter (11) de façon à pouvoir tourner dans le sens périphérique et en ce qu'une rotation a lieu au moyen d'un servo-moteur (33) calé sur le carter (11).

13. Dispositif selon l'une des revendications précédentes, caractérisé en ce que les deux couronnes de pales de rotor (3, 4) sont pourvues de dispositifs de blocage (52a, 52b).
